# EUROPÄISCHE PATENTSCHRIFT

(11) **EP 3 609 057 B1**
(45) Veröffentlichungstag und Bekanntmachung des Hinweises auf die Patenterteilung: **16.11.2022**
(21) Anmeldenummer: 19190476.2
(22) Anmeldetag: 07.08.2019
(51) Int. Cl.: H02K 3/24, H02K 9/22, H02K 55/02

(54) **MASCHINENSPULE FÜR EINE ELEKTRISCHE MASCHINE**
COIL FOR AN ELECTRIC MACHINE
BOBINE POUR UNE MACHINE ÉLECTRIQUE

(30) Priorität: 08.08.2018 DE 102018119291
(43) Veröffentlichungstag der Anmeldung: 12.02.2020
(73) Patentinhaber: Oswald Elektromotoren Gmbh, 63897 Miltenberg (DE)
(72) Erfinder: Oswald, Johannes, 63897 Miltenberg (DE); Oswald, Bernhard, 63897 Miltenberg (DE); de Waele, Alphons Theophile Augusta Maria, 5501 BH Veldhov (NL)
(74) Vertreter: Habermann Intellectual Property Partnerschaft von Patentanwälten mbB

(56) Entgegenhaltungen:
- EP-A1- 0 877 395
- EP-A1- 2 801 986
- WO-A2-01/06524
- JP-A- S61 229 306

## Beschreibung

Die Erfindung betrifft eine Maschinenspule für eine elektrische Maschine, wobei die Maschinenspule mindestens eine Wicklung aufweist, und wobei die Wicklung mehrere jeweils benachbart zueinander angeordnete und elektrisch leitend miteinander verbundene Wicklungsschichten aus einem elektrischen Leiter aufweist, wobei zwischen zwei benachbart zueinander angeordneten Wicklungsschichten ein Wärmeleitelement angeordnet und wärmeübertragend mit mindestens einer Wicklungsschicht verbunden ist, wobei mindestens ein Abschnitt des Wärmeleitelements aus der Wicklung hinausragt und wobei an einem Abschnitt ein einer Kühleinrichtung verbindbares Kühlelement angeordnet und mit dem Abschnitt wärmeübertragend verbunden ist, wobei das Wärmeleitelement mit mindestens einer an das Wärmeleitelement angrenzenden Wicklungsschicht elektrisch leitend verbunden ist, sodass das Wärmeleitelement und die elektrisch leitend mit dem Wärmeleitelement verbundene Wicklungsschicht auf demselben Potenzial liegen.

Solche Maschinenspulen stellen einen wesentlichen Bestandteil elektrischer Maschinen dar. Üblicherweise weisen Maschinenspulen mindestens eine Wicklung eines Leiters beispielsweise aus Draht auf, der zum Beispiel auf einen geeigneten Spulenträger um eine Wicklungsachse herum aufgewickelt ist. Dabei kann der Leiter in einer Windung oder in mehreren Windungen je Wicklungsschicht um die Wicklungsachse herum angeordnet sein. Dabei ist eine Wicklungsschicht dadurch charakterisiert, dass die Windungen einer Wicklungsschicht jeweils den gleichen Abstand zu der Wicklungsachse aufweisen. Sämtliche Windungen sind üblicherweise elektrisch isoliert zueinander ausgeführt, um einen sogenannten Windungsschluss zu vermeiden.

Maschinenspulen weisen neben den von elektrischem Strom durchflossenen Wicklungen ein üblicherweise als Eisenkern bezeichnetes Element aus einem Material auf, das den durch den Stromfluss durch die Wicklung hervorgerufenen magnetischen Fluss gut leiten kann. Als Kernmaterial wird häufig ein weichmagnetisches Material verwendet. Durch die jeweils verwendete Windungsanordnung und -form der Wicklung, der Drahtdurchmesser, das Wickel- und das Kernmaterial werden die elektrischen und magnetischen Eigenschaften der Maschinenspule bestimmt.

Die Maschinenspulen kommen in unterschiedlichen elektrischen Maschinen wie beispielsweise Gleichstrommaschinen, Transformatoren, Asynchronmaschinen, Synchronmaschinen und Einphasenwechselstrommaschinen zum Einsatz. Je nach Anwendungszweck unterscheiden sich die Anzahl der Wicklungsschichten, das verwendete elektrische leitende Material des elektrischen Leiters, die geometrische Anordnung der Wicklungen und die Anordnung und Ausgestaltung des Eisenkerns voneinander. Aus dem Stand der Technik sind für die unterschiedlichsten Einsatzzwecke geeignete Bauformen der Maschinenspulen bekannt.

In der Druckschrift JPS 61 229306 A wird eine Spule mit Windungsleitungen aus supraleitendem Material beschrieben, wobei zwischen den Windungen flache und rechteckig ausgestaltete Wärmeausgleichsplatten zum Wärmeausgleich angeordnet sind. Dabei sind die Wärmeausgleichsplatten elektrisch isoliert von den elektrisch leitenden Windungen ausgestaltet. Die mittels der Wärmeausgleichsplatten aufgenommene Wärme wird über an den Wärmeausgleichsplatten angeordnete Kühlleitungen abgeführt. Die in der beschriebenen Spule verwendeten Wicklung wird mit rund ausgeführten Windungsleitungen erzeugt.

Aus dem Stand der Technik ist es auch bekannt, dass die Maschinenspulen je nach Einsatzzweck auf geeignete Art und Weise gekühlt werden müssen, um beispielsweise Stromwärmeverluste in den Wicklungen abzuführen. Eine Kühlung insbesondere der Wicklungen ist zwingend auch bei elektrischen Maschinen erforderlich, deren Wicklungen aus supraleitenden Materialien bestehen. Wicklungen aus supraleitenden Materialien müssen bis unter eine materialspezifische Sprungtemperatur gekühlt werden. Bei Unterschreiten dieser Sprungtemperatur fällt der elektrische Widerstand der supraleitenden Materialien sprunghaft auf nahezu Null ab, sodass insbesondere bei der Beaufschlagung der Wicklungen mit einem Wechselstrom nur ein geringer Energieverlust auftritt.

Zur Kühlung der Wicklungen sind aus dem Stand der Technik unterschiedliche Kühlkonzepte bekannt. Beispielsweise ist es bekannt, die Wicklungen direkt über ein entsprechendes Kältemedium zu kühlen.

Bei den bekannten elektrischen Maschinen mit supraleitenden Wicklungen werden die Wicklungen üblicherweise durch Badkryostaten, bei denen die zu kühlenden Maschinenspulen von einer Kryoflüssigkeit, beispielsweise von flüssigem Stickstoff, umgeben sind, oder durch einen Refrigeratorkryostaten, bei dem die Kühlung durch einen sogenannten Cryo-Cooler erfolgt, gekühlt. Bei den bekannten Kühleinrichtungen ist es erforderlich, dass die im Bereich der Wicklungen angeordneten Komponenten der Kühleinrichtung wie beispielsweise die Badkryostaten aus einem elektrisch nicht-leitendem Material hergestellt sind, um eine Induzierung von Wirbelströmen in den Komponenten zu vermeiden. Die herkömmliche Anschlusstechnik für weitere Komponenten der Kühleinrichtung wie beispielsweise des Wärmetauschers ist hingegen üblicherweise aus Metall ausgeführt. Insbesondere auf Grund der unterschiedlichen Wärmeausdehnungseigenschaften der verwendeten unterschiedlichen Materialien ist es bei den bekannten Maschinen äußerst aufwendig, flüssigkeits- und gasdichte Übergänge bereitzustellen und ein unerwünschtes Austreten der Kryoflüssigkeit zu vermeiden.

Als Aufgabe der Erfindung wird es angesehen, die aus dem Stand der Technik bekannten Maschinenspulen so weiter zu entwickeln, dass eine möglichst einfache Kühlung der Wicklungen der Maschinenspulen erreicht wird.

Diese Aufgabe wird erfindungsgemäß mit den Merkmalen des unabhängigen Anspruchs 1 gelöst. Vorteilhafte Ausgestaltungsformen der Erfindung sind durch die Unteransprüche beschrieben.

Erfindungsgemäß ist das Wärmeleitelement mit mindestens einer an das Wärmeleitelement angrenzenden Wicklungsschicht elektrisch leitend verbunden, sodass das Wärmeleitelement und die elektrisch leitend mit dem Wärmeleitelement verbundene Wicklungsschicht auf demselben Potenzial liegen.

Erfindungsgemäß weist die Maschinenspule einen Spulenträger und/oder einen Eisenkern auf. Auf diese Weise liegen das Wärmeleitelement und die elektrisch leitend mit dem Wärmeleitelement verbundene Wicklungsschicht auf demselben Potenzial, so dass über das Wärmeleitelement ein elektrischer Strom fließt.

Das Wärmeleitelement ist vorteilhafterweise aus einem wärmeleitenden Material wie beispielsweise Kupfer hergestellt. Erfindungsgemäß wird über das Wärmeleitelement die in der Wicklung auftretende Wärme aus der Wicklung abgeführt und über das an dem Abschnitt anliegende Kühlelement aus der elektrischen Maschine herausgeführt. Das Kühlelement liegt dabei vorteilhafterweise ausschließlich an dem Abschnitt an, so dass die Kühlung der Wicklungen zumindest im Wesentlichen über das Wärmeleitelement, den Abschnitt und das an dem Abschnitt angeordnete Kühlelement erfolgt. Das Kühlelement ist vorteilhafterweise durch Schweißen, Löten oder Kleben mit dem Abschnitt verbunden.

Das Wärmeleitelement ist vorteilhafterweise ein Blech, das zwischen zwei Wicklungsschichten der Wicklung angeordnet ist und teilweise aus der Wicklung hinausragt. Die Abmessungen des verwendeten Wärmeleitelements bzw. Blechs sollten dabei so gewählt sein, dass eine möglichst gute thermische Anbindung der Wicklung bzw. der unmittelbar an das Wärmeleitelement angrenzenden Wicklungsschichten erreicht werden kann. Vorteilhafterweise sind die Abmessungen des Wärmeleitelements so gewählt, dass das Wärmeleitelement vollflächig an den benachbart zueinander angeordneten Wicklungsschichten anliegt.

Vorteilhafterweise bedeckt das Wärmeleitelement die Wicklungsschicht nahezu vollständig. Erfindungsgemäß wird der Wicklungsvorgang bei dieser Ausgestaltung vor dem Einbringen des Wärmeleitelements unterbrochen und der Leiter zunächst abgetrennt. Anschließend wird das Wärmeleitelement an der äußersten Wicklungsschicht angeordnet und der Wicklungsvorgang neu wieder aufgenommen. Bei dieser Ausgestaltung werden durch das Wärmeleitelement getrennte Wicklungsschichten vorteilhafterweise an Übergangspunkten durch einen geeigneten Leiter elektrisch leitend miteinander verbunden.

Es ist aber auch möglich, dass das Wärmeleitelement die Wicklungsschicht nicht vollständig bedeckt, sondern lediglich abschnittsweise an der Wicklungsschicht anliegt. Bei dieser Ausgestaltung kann das Wärmeleitelement vorteilhafterweise bei einem Wicklungsvorgang in die Wicklung eingewickelt werden.

Um eine höhere Kühlleistung der Wicklung zu erreichen, ist erfindungsgemäß vorgesehen, dass die Maschinenspule mehrere Wärmeleitelemente aufweist, wobei jeweils ein Wärmeleitelement jeweils zwischen zwei benachbart zueinander angeordneten Wicklungsschichten angeordnet ist. Die Wärmeleitelemente sind dabei vorteilhafterweise in einem vorgegebenen Abstand zueinander jeweils zwischen zwei Wicklungsschichten angeordnet, so dass von jedem Wärmeleitelement die innerhalb eines durch zwischen zwei Wärmeleitelementen angeordneten Wicklungsschichten gebildeten Wicklungsabschnitts der Wicklung austretende Wärme abgeführt wird. Dabei weist jeder Wicklungsabschnitt mehrere Wicklungsschichten auf und ist durch mindestens ein Wärmeleitelement von dem nächsten Wicklungsabschnitt oder einer Umgebung der Wicklung begrenzt.

Vorteilhafterweise ist vorgesehen, dass der elektrische Leiter aus einem supraleitenden elektrischen Material hergestellt ist. Als supraleitendes Material kommen beispielsweise Hochtemperatursupraleiter in Frage, deren Sprungtemperatur bereits bei einer Temperatur von minus 140 Grad Celsius erreicht sein kann. Für die Wicklung der Maschinenspulen können supraleitende Materialien beispielsweise in Band- oder Drahtform eingesetzt werden. Als supraleitende Materialien kommen unter anderem die Zusammensetzungen YBCO 10 (YBCO coated conductor), BSCCO, MgB2 oder Pnictide in Frage, die bei ausreichend tiefen Temperaturen eine außerordentlich hohe Stromdichte aufweisen können.

Bei einer besonders vorteilhaften Ausgestaltung der erfindungsgemäßen Maschinenspule ist vorgesehen, dass es sich bei dem Kühlelement um ein an dem Abschnitt anliegendes Kühlrohr handelt. Das Kühlrohr ist vorteilhafterweise ebenfalls aus einem thermisch gut leitenden Material wie beispielsweise Kupfer hergestellt und wird durch ein Wärmeträgermedium wie beispielsweise Wasser durchströmt.

Vorteilhafterweise ist vorgesehen, dass das Wärmeleitelement und das Kühlrohr aus einem metallischen Werkstoff hergestellt sind. Bei dem metallischen Werkstoff handelt es sich vorzugweise um Kupfer, Kupfernickel, Neusilber oder Edelstahl. Durch die Verwendung des metallischen Werkstoffs kann das Wärmeleitelement thermisch gut an die Wicklung angebunden werden und können das Kühlrohr und das Wärmeleitelement beispielsweise durch eine Lötverbindung miteinander verbunden werden, die auch bei für die Abkühlung supraleitender Wicklungen unterhalb der Sprungtemperatur erforderlichen kryogenen Temperaturen eine ausreichende Festigkeit und Dichtheit bieten. Zudem weisen Wärmeleitelemente und Kühlrohre aus Metall eine ähnliche Wärmeausdehnung wie supraleitende Materialien auf, so dass die Wärmeleitelemente einfach an die Wicklungsschichten angelegt werden können und auch bei Temperaturschwankungen ein für den erforderlichen Wärmetransport ausreichender Kontakt zwischen den Wicklungsschichten und dem Wärmeleitelement erreicht wird. Darüber hinaus leiten die metallischen Materialien Wärme gut, so dass durch metallische Wärmeleitelemente und Kühlrohre eine gute thermische Anbindung an die Wicklung erreicht werden kann.

Um supraleitende Wicklungen unterhalb der Sprungtemperatur abkühlen zu können ist vorteilhafterweise vorgesehen, dass das Kühlrohr von einem kryogenen Fluid durchströmt ist. Erfindungsgemäß sind die Kühlrohre ausreichend druckstabil ausgelegt und aus einem Material gefertigt, das sich zum Transport kryogener Kühlflüssigkeiten beziehungsweise Kältemittel wie beispielsweise Helium, Wasserstoff, Neon, Stickstoff oder dergleichen eignet.

Um in den Kühlrohren auftretende Wirbelstromverluste weitestgehend zu vermeiden, weisen die Kühlrohre beispielsweise einen Außendurchmesser zwischen 0,3 mm und 1,5 mm auf.

Vorteilhafterweise weisen die Kühlrohre zudem eine Wandstärke von maximal 10 % des Außendurchmessers auf. Die Wandstärke liegt besonders vorteilhafterweise zwischen 0,03 mm und 0,15 mm. Auf diese Weise wird lediglich ein äußerst geringer Wirbelstrom in dem Kühlrohr induziert.

Bei einer vorteilhaften Verwendung von Wärmeleitelementen zur Kühlung der Wicklung wird die Kühlleistung insbesondere durch Konvektion über das Wärmeleitelement auf eine Wandung des Kühlrohrs und auf die das Kühlrohr durchströmende Kühlflüssigkeit übertragen. Bei Verwendung eines kryogenen Fluides innerhalb des Kühlrohrs kann zum Wärmeabtransport beispielsweise auch ein Phasenübergang der Kühlflüssigkeit von flüssig zu dampfförmig ausgenutzt werden, so dass lediglich eine geringe Einströmgeschwindigkeit der Kühlflüssigkeit in das Kühlrohr von beispielsweise 1 bis 2 m/s erforderlich ist. Es ist aber auch möglich und vorteilhafterweise vorgesehen, dass der Wärmeabtransport ohne Phasenübergang erfolgt, wobei vorteilhafterweise höhere Einströmgeschwindigkeiten von beispielsweise 10 bis 20 m/s verwendet werden können.

Insbesondere bei einer Beaufschlagung der Wicklung mit Wechselstrom und einer leitenden Verbindung zwischen dem Wärmeleitelement und mindestens einer Wicklungsschicht ist vorteilhafterweise vorgesehen, dass das Kühlrohr ein beabstandet zu der Wicklung angeordneten elektrischen Isolierabschnitt aufweist. Auf diese Weise kann ein Stromfluss auf weitere Bestandteile der elektrischen Maschine wie beispielsweise eine mit dem Kühlrohr verbundene Kältemaschine vermieden werden.

Bei einer besonders vorteilhaften Ausgestaltung der Maschinenspule ist vorgesehen, dass das Wärmeleitelement mindestens einen Unterbrechungsabschnitt aufweist, in dem das Wärmeleitelement vollständig unterbrochen ist, so dass durch das an der Wicklungsschicht anliegende Wärmeleitelement keine durchgehende Leiterschleife gebildet wird. Auf diese Weise kann insbesondere bei Verwendung der Maschinenspule mit Wechselströmen ein in dem Wärmeleitelement induzierter Stromfluss reduziert werden, wodurch eine durch die Induktion hervorgerufene Verlustleistung in dem Wärmeleitelement verringert wird.

Vorteilhafterweise ist vorgesehen, dass die Wicklung torusförmig ausgestaltet ist und dass die Wicklung aus einem bandförmigen elektrischen Leitermaterial hergestellt ist. Durch die Verwendung bandförmiger elektrischer Leiter bzw. von Flachleitern können die verschiedenen, gegebenenfalls elektrisch und thermisch voneinander abgeschirmten Wicklungsschichten mit einer maximalen Kontaktfläche mit den Wärmeleitelementen angeordnet werden, um eine möglichst gute thermische Anbindung an das Wärmeleitelement zu erreichen. Hierbei ist vorteilhafterweise auch vorgesehen, dass das Wärmeleitelement ebenfalls aus einem Flachleiter bzw. einem bandförmigen Material hergestellt ist. Bei einer Maschinenspule mit einer Wicklung aus einem bandförmigen Leiter weisen die Wicklungsschichten vorteilhafterweise jeweils eine einzige Windung auf.

Vorteilhafterweise ist das Wärmeleitelement in derselben Richtung ausgerichtet wie die Wicklung. Dies ist insbesondere durch Verwendung bandförmiger Leiter und Wärmeleitelemente möglich. Da die Wärmeleitelemente kein Bestandteil der Wicklung sind und elektrisch zumindest gegenüber weiteren Komponenten der elektrischen Maschine isoliert ausgeführt sein können, kann durch die

Wärmeleitelemente zudem eine gute Abschirmung von magnetischen Flusskomponenten erreicht werden, die zwischen Wicklungsschichten oder Wicklungsabschnitten einer Wicklung auftreten. Da die Wärmeleitelemente abschnittsweise aus der Wicklung hinausragen und gleichzeitig vorteilhafterweise an der gesamten Wicklungsfläche einer Wicklungsschicht anliegen, weisen die Wärmeleitelemente zudem eine größere Breite auf, als die Wicklungsschicht. Hierdurch wird die Abschirmwirkung noch verstärkt.

Die Erfindung betrifft auch eine elektrische Maschine mit einem Stator, mit einem Rotor und mit mehreren Maschinenspulen mit Wicklungen aus einem supraleitenden elektrischen Leiter, die wie vorangehend beschrieben ausgestaltet sind, wobei die Wicklungen jeweils in einem thermischen Isolator angeordnet sind und wobei die elektrische Maschine eine mit dem Kühlelement wärmeleitend verbundene Kühleinrichtung aufweist und wobei die elektrische Maschine eine mit dem Kühlelement wärmeleitend verbundene Kühleinrichtung aufweist. Die elektrische Maschine mit einer supraleitenden Wicklung kann erfindungsgemäß beispielsweise mit einem dreiphasigen Wechselstrom betrieben werden. Es ist aber auch möglich, die elektrische Maschine mit einem höherphasigen Wechselstrom zu betreiben. Die elektrische Maschine kann dabei sowohl in einem niedrigeren Drehzahlbereich und gleichzeitig hohem Drehmoment als auch in einem sogenannten Feldschwächungsbereich bis zu hohen Geschwindigkeiten bei einer konstanten Leistung betrieben werden.

Bei der elektrischen Maschine handelt es sich erfindungsgemäß um eine rotierende elektrische Maschine. Die Maschinenspulen können sowohl am oder im Rotor als auch am oder im Stator angeordnet sein. Der Stator kann außerhalb (als Außenläufer) oder innerhalb des Rotors (als Innenläufer) angeordnet sein.

Um die zur Kühlung benötigte Kühlleistung zu verringern ist erfindungsgemäß vorgesehen, dass die zu kühlende Wicklung und das Kühlrohr innerhalb eines thermischen Isolators angeordnet sind. Beispielsweise kann es sich bei dem thermischen Isolator um eine Strahlung abschirmende Folie oder um eine andere Spiegelfläche handeln.

Es ist darüber hinaus möglich, dass der thermische Isolator Bereiche aufweist, in denen ein Vakuum erzeugbar ist. In diesem Fall ist es erforderlich, dass die zu kühlende Wicklung, das Wärmeleitelement und das Kühlelement vakuumdicht von dem thermischen Isolator getrennt sind. Es ist auch möglich, dass in dem gesamten thermischen Isolator ein Vakuum herrscht.

Um die in dem thermischen Isolator durch das von den Maschinenspulen hervorgerufene Wechselfeld erzeugten Wirbelströme zu verringern, ist vorteilhafterweise vorgesehen, dass der thermische Isolator aus einem Material besteht, das einen hohen elektrischen Widerstand aufweist. Beispielsweise kann der thermische Isolator aus einem Kunststoff mit entsprechend hohem elektrischen Widerstand bestehen.

Bei einer besonders vorteilhaften Ausgestaltung des Erfindungsgedankens ist vorgesehen, dass das Kühlelement mit einem kryogenen Fluid befüllbar ist. Bei dem kryogenen Fluid kann es sich um eine kryogene Flüssigkeit oder um gekühltes Gas handeln. Als kryogene Flüssigkeit kommen beispielsweise flüssiger Stickstoff, flüssiges Neon, flüssiger Wasserstoff oder flüssiges Helium in Frage.

Vorteilhafterweise ist vorgesehen, dass die Kühleinrichtung einen Kryokühler aufweist. Bei dem Kryokühler handelt es sich um einen geeigneten Wärmetauscher, der von dem Kryofluid aufgenommene Wärme abführt. In diesem Fall stellen die Komponenten der Kühleinrichtung zweckmäßigerweise einen geschlossenen Kreislauf dar, der von entsprechenden zwischen dem Kryokühler und den Kühlrohren angeordnete Schlauch- oder Rohrverbindungen gebildet wird. Zur Umwälzung des Kryofluids innerhalb des geschlossenen Kühlkreislaufs kann eine entsprechende Kühlmittelpumpe vorgesehen sein. Es ist aber auch möglich, die Kühleinrichtung in einem offenen Kühlkreislauf zu betreiben.

Vorteilhafterweise ist vorgesehen, dass die Kühleinrichtung eine Regeleinrichtung aufweist, die dazu geeignet ist, eine Kühlleistung an eine Maschinenlast adaptiv anzupassen. Auf diese Weise können beispielsweise auch kurzfristig auftretende höhere Maschinenlasten von der elektrischen Maschine aufgenommen werden, ohne dass die Temperatur der Wicklungen die Sprungtemperatur erreicht und die Wicklungen die supraleitende Eigenschaft verlieren. Die Regeleinrichtung kann beispielsweise ein in dem Kühlkreislauf angeordnetes Regelventil, einen Temperatursensor im Rücklauf des Kühlkreislaufs und eine digital-elektronische Berechnungseinrichtung aufweisen, wobei die Regeleinrichtung an eine Regelung der gemessenen Rücklauftemperatur mit dem Regelventil angepasst ist.

Bei einer besonders vorteilhaften Ausgestaltung der Erfindung ist vorgesehen, dass die elektrische Maschine eine steuerbare oder regelbare Versorgungseinrichtung zur Steuerung oder Regelung einer Maschinendrehzahl aufweist. Bei der steuerbaren oder regelbaren Versorgungseinrichtung kann es sich beispielsweise um einen Frequenzumrichter handeln.

### Weitere vorteilhafte Ausgestaltungen des

Erfindungsgedankens werden in der Zeichnung anhand von exemplarischen Ausführungsbeispielen erläutert.

Es zeigt:
Figur 1 eine schematisch dargestellte Draufsicht auf eine erfindungsgemäße Maschinenspule,
Figur 2 eine schematisch dargestellte Schnittansicht der in Figur 1 dargestellten Maschinenspule längs der Schnittlinie I-I,
Figur 3 eine schematisch dargestellte Schnittansicht einer alternativ ausgestalteten Maschinenspule und
Figur 4 eine schematisch dargestellte Ansicht einer elektrischen Maschine.

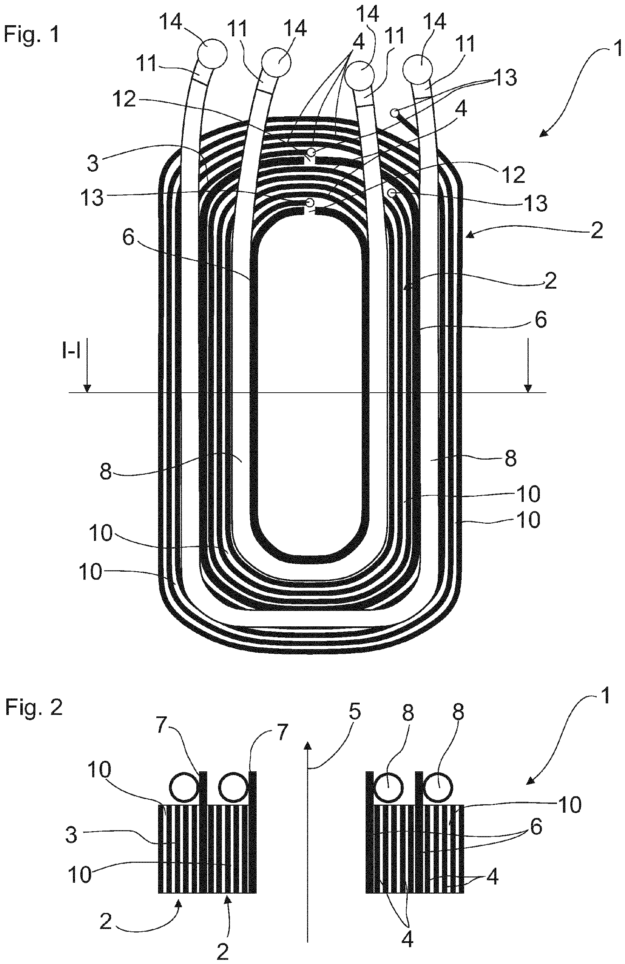

In Figur 1 ist schematisch eine Draufsicht auf eine Maschinenspule 1 und in Figur 2 eine Schnittansicht der Maschinenspule 1 längs der Schnittlinie I-I dargestellt. Die Maschinenspule 1 weist eine mehrere Wicklungsabschnitte 2 umfassende Wicklung 3 auf. Die Wicklung 3 bzw. die Wicklungsabschnitte 2 weisen mehrere benachbart zueinander angeordnete und elektrisch leitend miteinander verbundene Wicklungsschichten 4 aus einem elektrischen Leiter auf. In der Zeichnung sind exemplarisch einzelne Wicklungsschichten 4 mit einem Bezugszeichen gekennzeichnet.

Die Wicklungsschichten 4 weisen jeweils eine Windung um eine Windungsachse 5 auf. Der elektrische Leiter ist bandförmig ausgestaltet und aus einem supraleitenden Material hergestellt. Die Wicklung 3 ist torusförmig ausgestaltet.

Zwischen zwei benachbart zueinander angeordneten Wicklungsschichten 4 ist ein Wärmeleitelement 6 angeordnet und wärmeübertragend mit mindestens einer Wicklungsschicht 4 verbunden. Zudem ist an einer ersten inneren Wicklungsschicht 4 ein Wärmeleitelement 6 angeordnet. Jeweils ein Abschnitt 7 der Wärmeleitelemente 6 ragt aus der Wicklung 3 hinaus. An dem Abschnitt 7 ist jeweils ein Kühlrohr 8 angeordnet und mit dem Abschnitt 7 wärmeübertragend verbunden ist.

Die Wicklungsschichten 4 sind durch elektrische Isolierschichten 10 gegeneinander elektrisch isoliert. Zusätzlich weisen die Kühlrohre 8 jeweils einen elektrischen Isolierabschnitt 11 auf. In der Zeichnung sind einzelne elektrische Isolierschichten 10 exemplarisch mit einem Bezugszeichen gekennzeichnet.

Die Wärmeleitelemente 6 liegen nahezu vollständig an den jeweils benachbart angeordneten Wicklungsschichten 4 an. Die Wärmeleitelemente 6 weisen jedoch jeweils einen Unterbrechungsabschnitt 12 auf, in dem das jeweilige Wärmeleitelement 6 vollständig unterbrochen ist, so dass durch die an den Wicklungsschichten 4 anliegenden Wärmeleitelemente 6 keine durchgehende Leiterschleife gebildet wird.

Die Wicklungsabschnitte weisen jeweils Kontaktstellen 13 auf, in denen die Wicklungsabschnitte 2 untereinander und mit einer elektrischen Versorgungseinrichtung verbunden werden können. Zudem weisen die Kühlrohre 8 jeweils Verbindungselemente 14 zur Verbindung der Kühlrohre mit einer Kühleinrichtung auf.

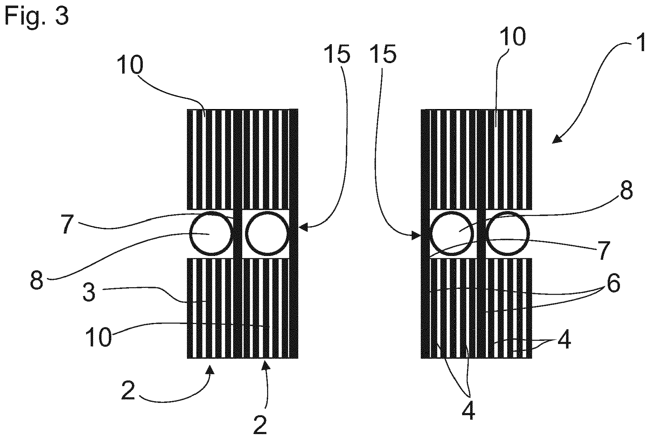

In Figur 3 ist schematisch eine Schnittansicht einer alternativ ausgestalteten Maschinenspule 1 dargestellt. Bei der in Figur 3 dargestellten Maschinenspule 1 ragt der Abschnitt 7 der Wärmeleitelemente 6 jeweils in einen Zwischenbereich 15 zwischen zwei beabstandet zueinander angeordneten Windungen 3. Auf diese Weise können mit Hilfe der Wärmeleitelemente 6 und der mit der Kühleinrichtung verbindbaren Kühlrohre 8 zwei Windungen 3 der Maschinenspule 1 gekühlt werden.

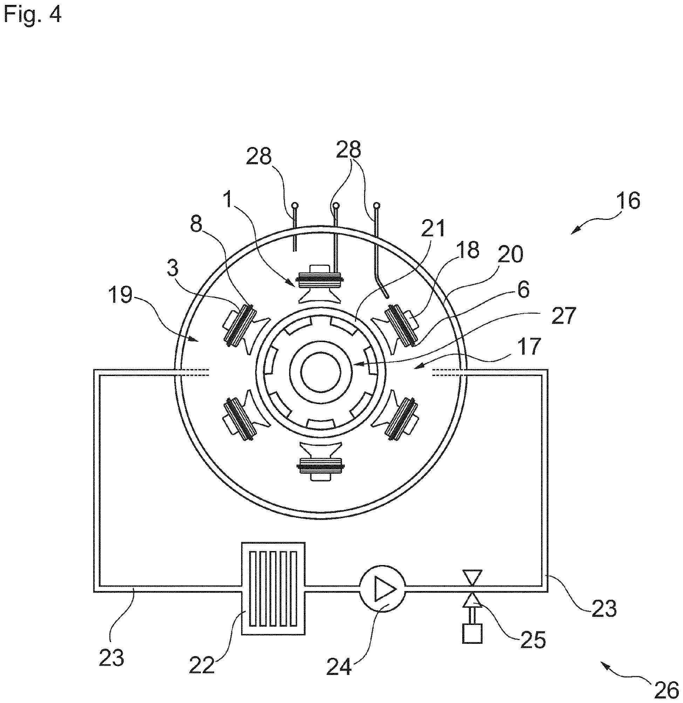

Figur 4 zeigt eine schematische Darstellung einer elektrischen Maschine 16 mit einem Stator 17, an dem mehrere Maschinenspulen 1 angeordnet sind. Wicklungen 3 der Maschinenspulen 1 bestehen aus einem supraleitenden Material. Zwischen zwei Wicklungsschichten der Wicklungen 3 ist jeweils ein Wärmeleitelement 6 mit einem Kühlrohr 8 angeordnet. Die Maschinenspulen 1 weisen zudem Spulenkerne 18 auf.

Der Stator 17 ist innerhalb eines thermischen Isolators 19 angeordnet, der von zwei zylindrischen und koaxial zueinander angeordneten Vakuumröhren 20, 21 und nicht dargestellten Vakuumröhrendeckeln gebildet ist.

In der Zeichnung ist zur Veranschaulichung jeweils nur eine Maschinenspule 1, eine Wicklung 3, ein Wärmeleitelement 6, ein Kühlrohr 8 und ein Spulenkern 18 mit einem zugeordneten Bezugszeichen versehen.

Die Kühlrohre 8 sind mit einem Kryokühler 22 über Rohrleitungen 23 verbunden, wobei Zuleitungen von den Rohrleitungen 23 zu den Kühlrohren 8 nicht dargestellt sind und durch den gestrichelt dargestellten Verlauf angedeutet werden. Ein kryogenes Fluid wird innerhalb dieses von den Kühlrohren 8, dem Kryokühler 22, den Rohrleitungen 23, einer Kühlmittelpumpe 24 und einer Regeleinrichtung 25 gebildeten Kühlkreislauf mit Hilfe der Kühlmittelpumpe 24 innerhalb des Kühlkreislaufs umgewälzt. Mit der Regeleinrichtung 25 wird die Kühlmitteldurchflussmenge gesteuert. Der Kryokühler 22, die Kühlmittelpumpe 24, die Rohrleitungen 23 einschließlich der nicht dargestellten Zuleitungen und die Regeleinrichtung 25 bilden eine Kühleinrichtung 26.

Im Inneren der elektrischen Maschine 1 befindet sich ein Rotor 27. Die Wicklungen 3 der Maschinenspulen 1 werden über elektrische Anschlüsse 28 über einen nicht dargestellten Frequenzumrichter mit einem Drehstrom versorgt.

## Patentansprüche

1. Maschinenspule (1) für eine elektrische Maschine (16), wobei die Maschinenspule (1) mindestens eine Wicklung (3) aufweist, und wobei die Wicklung (3) mehrere jeweils benachbart zueinander angeordnete und elektrisch leitend miteinander verbundene Wicklungsschichten (4) aus einem elektrischen Leiter aufweist, wobei zwischen zwei benachbart zueinander angeordneten Wicklungsschichten (4) ein Wärmeleitelement (6) angeordnet und wärmeübertragend mit mindestens einer Wicklungsschicht (4) verbunden ist, wobei mindestens ein Abschnitt (7) des Wärmeleitelements aus der Wicklung (3) hinausragt und wobei an dem Abschnitt (7) ein mit einer Kühleinrichtung (26) verbindbares Kühlelement angeordnet und mit dem Abschnitt (7) wärmeübertragend verbunden ist, **dadurch gekennzeichnet, dass** das Wärmeleitelement (6) mit mindestens einer an das Wärmeleitelement (6) angrenzenden Wicklungsschicht (4) elektrisch leitend verbunden ist, sodass das Wärmeleitelement (6) und die elektrisch leitend mit dem Wärmeleitelement (6) verbundene Wicklungsschicht (4) auf demselben Potenzial liegen.

2. Maschinenspule (1) gemäß Anspruch 1, **dadurch gekennzeichnet, dass** der elektrische Leiter aus einem supraleitenden elektrischen Material hergestellt ist.

3. Maschinenspule (1) gemäß Anspruch 1 oder Anspruch 2, **dadurch gekennzeichnet, dass** die Maschinenspule (1) mehrere Wärmeleitelemente (6) aufweist, wobei jeweils ein Wärmeleitelement (6) jeweils zwischen zwei benachbart zueinander angeordneten Wicklungsschichten (4) angeordnet ist.

4. Maschinenspule (1) gemäß einem der voranstehenden Ansprüche, **dadurch gekennzeichnet, dass** es sich bei dem Kühlelement um ein an dem Abschnitt (7) anliegendes Kühlrohr (8) handelt.

5. Maschinenspule (1) gemäß Anspruch 4, **dadurch gekennzeichnet, dass** das Wärmeleitelement (6) und das Kühlrohr (8) aus einem metallischen Werkstoff hergestellt sind und dass das Kühlrohr (8) mindestens abschnittsweise durch eine Lötverbindung mit dem Wärmeleitelement (6) verbunden ist.

6. Maschinenspule (1) gemäß einem der voranstehenden Ansprüche, **dadurch gekennzeichnet, dass** das Kühlrohr (8) einen beabstandet zu der Wicklung (3) angeordneten elektrischen Isolierabschnitt (11) aufweist.

7. Maschinenspule (1) gemäß einem der voranstehenden Ansprüche, **dadurch gekennzeichnet, dass** die Wicklung (3) torusförmig ausgestaltet ist und dass die Wicklung (3) aus einem bandförmigen elektrischen Leitermaterial hergestellt ist.

8. Elektrische Maschine (16) mit einem Stator (17), mit einem Rotor (27) und mit mehreren Maschinenspulen (1) mit Wicklungen (3) aus einem supraleitenden elektrischen Leiter gemäß einem der Ansprüche 2 bis 7, wobei die Wicklungen (3) jeweils in einem thermischen Isolator (19) angeordnet sind und wobei die elektrische Maschine (16) eine mit dem Kühlelement wärmeleitend verbundene Kühleinrichtung (26) aufweist.

9. Elektrische Maschine (16) gemäß Anspruch 8, **dadurch gekennzeichnet, dass** der thermische Isolator (19) Bereiche aufweist, in denen ein Vakuum erzeugbar ist.

10. Elektrische Maschine (16) gemäß Anspruch 8 oder Anspruch 9, **dadurch gekennzeichnet, dass** der thermische Isolator (19) aus einem Material besteht, das einen hohen elektrischen Widerstand aufweist.

11. Elektrische Maschine (16) gemäß einem der Ansprüche 8 bis 10, **dadurch gekennzeichnet, dass** die Kühleinrichtung (26) einen Kryokühler (22) aufweist oder in einem offenen Kühlkreis von einem flüssigen oder gasförmigen Kältemittel durchströmt wird.

## Claims

1. Machine coil (1) for an electric machine (16), wherein the machine coil (1) comprises at least one winding (3), and wherein the winding (3) comprises a plurality of winding layers (4) of an electrical conductor, which winding layers are in each case arranged adjacent to one another and are electrically conductively connected to one another, wherein a heat-conducting element (6) is arranged between two winding layers (4) arranged adjacent to one another and is connected in a heat-exchanging manner to at least one winding layer (4), wherein at least one portion (7) of the heat-conducting element protrudes from the winding (3) and wherein a cooling element which can be connected to a cooling device (26) is arranged on the portion (7) and is connected in a heat-exchanging manner to the portion (7), **characterised in that** the heat-conducting element (6) is electrically conductively connected to at least one winding layer (4) adjoining the heat-conducting element (6), so that the heat-conducting element (6) and the winding layer (4) electrically conductively connected to the heat-conducting element (6) are at the same potential.

2. Machine coil (1) according to claim 1, **characterised in that** the electrical conductor is produced from a superconducting electrical material.

3. Machine coil (1) according to claim 1 or claim 2, **characterised in that** the machine coil (1) comprises a plurality of heat-conducting elements (6), wherein in each case one heat-conducting element (6) is respectively arranged between two winding layers (4) arranged adjacent to one another.

4. Machine coil (1) according to any one of the preceding claims, **characterised in that** the cooling element is a cooling pipe (8) resting against the portion (7).

5. Machine coil (1) according to claim 4, **characterised in that** the heat-conducting element (6) and the cooling pipe (8) are produced from a metallic material, and **in that** the cooling pipe (8) is connected at least in some portions to the heat-conducting element (6) by a soldered connection.

6. Machine coil (1) according to any one of the preceding claims, **characterised in that** the cooling pipe (8) comprises an electrical insulating portion (11) arranged spaced apart from the winding (3).

7. Machine coil (1) according to any one of the preceding claims, **characterised in that** the winding (3) is toroidal, and **in that** the winding (3) is produced from a strip-shaped electrical conductor material.

8. Electric machine (16) having a stator (17), having a rotor (27) and having a plurality of machine coils (1) having windings (3) of a superconducting electrical conductor according to any one of claims 2 to 7, wherein the windings (3) are each arranged in a thermal insulator (19) and wherein the electric machine (16) comprises a cooling device (26) which is connected in a heat-conducting manner to the cooling element.

9. Electric machine (16) according to claim 8, **characterised in that** the thermal insulator (19) comprises regions in which a vacuum can be produced.

10. Electric machine (16) according to claim 8 or claim 9, **characterised in that** the thermal insulator (19) consists of a material which has a high electrical resistance.

11. Electric machine (16) according to any one of claims 8 to 10, **characterised in that** the cooling device (26) comprises a cryocooler (22) or is flowed through in an open cooling circuit by a liquid or gaseous coolant.

## Revendications

1. Bobine de machine (1) pour une machine électrique (16), la bobine de machine (1) présentant au moins un enroulement (3), et l'enroulement (3) présentant plusieurs couches d'enroulement (4) en un conducteur électrique, agencées respectivement au voisinage les unes des autres et reliées entre elles de manière électriquement conductrice, un élément conducteur de chaleur (6) étant agencé entre deux couches d'enroulement (4) agencées au voisinage l'une de l'autre et étant relié à au moins une couche d'enroulement (4) de manière à transmettre la chaleur, au moins une section (7) de l'élément conducteur de chaleur dépassant de l'enroulement (3) et un élément de refroidissement pouvant être relié à un dispositif de refroidissement (26) étant agencé sur la section (7) et étant relié à la section (7) de manière à transmettre la chaleur, **caractérisée en ce que** l'élément conducteur de chaleur (6) est relié de manière électriquement conductrice à au moins une couche d'enroulement (4) adjacente à l'élément conducteur de chaleur (6), de telle sorte que l'élément conducteur de chaleur (6) et la couche d'enroulement (4) reliée de manière électriquement conductrice à l'élément conducteur de chaleur (6) sont au même potentiel.

2. Bobine de machine (1) selon la revendication 1, **caractérisée en ce que** le conducteur électrique est fabriqué en un matériau électrique supraconducteur.

3. Bobine de machine (1) selon la revendication 1 ou la revendication 2, **caractérisée en ce que** la bobine de machine (1) présente plusieurs éléments conducteurs de chaleur (6), un élément conducteur de chaleur (6) étant agencé respectivement entre deux couches d'enroulement (4) agencées au voisinage l'une de l'autre.

4. Bobine de machine (1) selon l'une quelconque des revendications précédentes, **caractérisée en ce que** l'élément de refroidissement est un tube de refroidissement (8) appliqué sur la section (7).

5. Bobine de machine (1) selon la revendication 4, **caractérisée en ce que** l'élément conducteur de chaleur (6) et le tube de refroidissement (8) sont fabriqués en un matériau métallique et **en ce que** le tube de refroidissement (8) est relié au moins par sections à l'élément conducteur de chaleur (6) par une liaison brasée.

6. Bobine de machine (1) selon l'une quelconque des revendications précédentes, **caractérisée en ce que** le tube de refroidissement (8) présente une section d'isolation électrique (11) agencée à distance de l'enroulement (3).

7. Bobine de machine (1) selon l'une quelconque des revendications précédentes, **caractérisée en ce que** l'enroulement (3) est conçu en forme de tore et **en ce que** l'enroulement (3) est fabriqué en un matériau conducteur électrique en forme de bande.

8. Machine électrique (16) comprenant un stator (17), comprenant un rotor (27) et comprenant plusieurs bobines de machine (1) comprenant des enroulements (3) en un conducteur électrique supraconducteur selon l'une quelconque des revendications 2 à 7, les enroulements (3) étant respectivement agencés dans un isolant thermique (19) et la machine électrique (16) présentant un dispositif de refroidissement (26) relié à l'élément de refroidissement de manière à conduire la chaleur.

9. Machine électrique (16) selon la revendication 8, **caractérisée en ce que** l'isolant thermique (19) présente des zones dans lesquelles un vide peut être généré.

10. Machine électrique (16) selon la revendication 8 ou la revendication 9, **caractérisée en ce que** l'isolant thermique (19) consiste en un matériau qui présente une résistance électrique élevée.

11. Machine électrique (16) selon l'une quelconque des revendications 8 à 10, **caractérisée en ce que** le dispositif de refroidissement (26) présente un cryorefroidisseur (22) ou est traversé par un réfrigérant liquide ou gazeux dans un circuit de refroidissement ouvert.
